# EUROPEAN PATENT APPLICATION

(11) **EP 1 249 766 A2**
(43) Date of publication of application: **16.10.2002**
(21) Application number: 02252604.0
(22) Date of filing: 12.04.2002
(51) Int. Cl.: G06F 17/30

(54) **Personalized intranet portal**

(30) Priority: 12.04.2001 US 833433
(71) Applicant: General Electric Company, Schenectady, NY 12345 (US)
(72) Inventor: Sollenberger, Deborah Allen, Mason, Ohio 45040 (US); Darpel, David Mark, Crescent Springs, Kentucky 41017 (US); Talevski, Stevan Mile, Cincinnati, Ohio 45226 (US); Shumaker, Lance Christopher, Loveland, Ohio 45140 (US); Meyer, Kristin Sherwin, Cincinnati, Ohio 45255 (US); Journey, Jeffrey Thomas, West Chester, Ohio 45069 (US); Livingston, Jamie Thomas, Cincinnati, Ohio 45241 (US); Nabb, Robert William, Mason, Ohio 45040 (US); Gimbert, Norman Wesley, Cincinnati, Ohio 45236 (US)
(74) Representative: Pedder, James Cuthbert

(57) **Abstract**

An Intranet portal (100) is provided that is organized into six sections (102-112) for corporate or organizational Intranet users. The six sections (102-112) of the Intranet portal (100) are constructed using modules. Modules are small pieces of functionality to supply or provide access to data, applications, information and processes to the user over the Intranet. The user can then customize sections (102-112) of the Intranet portal (100) to correspond to that user's particular needs or requirements. The customization of the sections (102-112) occurs from the user adding, removing or rearranging modules in that section. The sections (102-112) of the Intranet portal (100) include a home section (102) for modules (202-208) of general interest to employees of the company or organization, a user section (104) for modules of personal interest to the user, a community section (106) for modules relating to the user's occupational responsibilities, a customer section (108) for modules relating to the company's customers, a performance section (110) for modules having performance information, and an input section (112) for modules that permit a user to provide feedback.

## Description

The present invention relates generally to a portal for users on an Intranet. More specifically, the present invention relates to an Intranet portal that can be customized by each user to provide the specific information and tools that are required by the user.

Many corporations and organization have Intranets that are used by their employees to access information and utilities that can assist the employees in performing their duties. These Intranets typically include web pages having a common design or layout ("look and feel"). The web pages can be written in HTML and Java and viewed using a web browser. Large-scale Intranets may include over 500,000 static web pages of information, which are available for access by employees. The employees, using the Intranet, may also be able to access the Internet for additional information. Employees of a corporation or organization may also have to execute a desktop application to access certain types of resources or information available on the corporation's network because the information or resource is not available or accessible from the Intranet.

Corporate and organizational Intranets are often structured in a manner that is very similar to the structure of the Internet, i.e. they are structured as a plurality of files and web pages stored at different locations with no common organizational scheme. A user typically begins his use of the corporate Intranet by accessing a home page. The home page generally has only very basic information and links that are suitable for all the employees of the corporation or organization. However, in some cases, the home page may not have any information or links at all for the user. The user is then given the responsibility for accessing the information helpful to the user from the other web pages on the Intranet and, if available, the web sites on the Internet. To access this other information from the Intranet, a user typically has to select an appropriate link to the information, if one is available, or manually type into the user's web browser the corresponding address of the information of interest. While this type of Intranet structure does provide a user with access to information, it is not particularly useful for the user because it can be very difficult and time-consuming for the user to locate and acquire the helpful and beneficial information. In addition, a user may not be aware of potentially valuable resources or information available on the Intranet because the user does not know that the particular resources or information are available from the Intranet. Furthermore, even if a user is aware of a particular web page or resource with information, the user still may not be able to access that web page or resource because the user does not know where that resource or web page is stored or located on the Intranet.

To assist a user in locating helpful information or resources, the home page of the Intranet may include a search function for the user. The user can then use the search function on the Intranet home page to look for the information of interest to the user. When using the search function, the user is generally returned a list of web pages, web sites, etc. that are related to the query of the user. The user will then have to evaluate the list of results from the search function and potentially access each web page, web site, etc. to determine if any web page, web site, etc. has information that is of interest to the user. This can be a very time-consuming and inefficient process for the user. In addition, the use of the search function does not ensure that the user has acquired the most helpful and beneficial information available, potentially further reducing the user's productivity. A user may not receive the most helpful information and resources because the user did not formulate his search query properly and as a result did not receive the web pages, web sites, etc. that have the information of interest to the user.

An employee's productivity is even further reduced if the employee or user has to access information from a file, application, database, etc. stored on the corporate network that is not accessible through the Intranet. The user will generally have a more difficult time locating the files and resources with the information because there is typically no search capability and the actual location of the information may be more difficult to obtain. The user also has to ensure that he has the appropriate desktop application for accessing the information and resources from the corporate network. In addition, if the user has to access information on both the Intranet and the corporate network, the user has to switch between using a web browser for the information on the Intranet and the particular desktop application(s) required to access the information from the corporate network.

One application that attempts to assist users in locating and accessing information includes a one page portal where users can access any modules that were included with the application. These modules typically include news services, weather information, a searching utility, and other publicly available information. The application permits a user to modify or change the included modules displayed on the one page portal and to adjust the order in which the included modules are displayed. Further included in the application is the capability to administer users, groups and modules.

Therefore, what is needed is an Intranet portal that permits each user to select the specific information and resources that the user requires and then provides that specific information and resources to the user over the Intranet regardless of whether the specific information and resources are located on the Intranet, the Internet or the corporate network.

One embodiment of the present invention is directed to a system for a user to access information and applications on a network of an organization. The system includes a server computer comprising a processor and a storage device and a client computer connected to the server computer. The system of the present invention includes a portal stored in the storage device of the server computer, or alternatively, the portal is stored on the client computer. The portal is accessible by a user on the client computer and can be executed by either the client computer or the server computer. The portal is configured to provide access to the information and applications on the network. In addition, the portal has a plurality of sections, each section having means for providing access to a particular type of information and applications on the network and means for the user to personalize at least one section of the plurality of sections to provide access to information and applications selected by the user.

Another embodiment of the present invention is directed to a portal for a user to obtain access to information and applications stored at a plurality of locations. The portal includes a plurality of sections, wherein each section of the plurality of sections is directed to a group of related information sources and applications stored at several locations. Each section of the plurality of sections can provide access to the corresponding group of related information sources and applications. The portal also includes means for the user to personalize at least one section of the plurality of sections to provide the user with access to particular information sources and applications in the group of related information sources and applications designated by the user.

One advantage of the present invention is that all the data, applications, information, and processes needed by an employee or user are made available and accessible from a single location or point.

Another advantage of the present invention is that the employee or user can customize the Intranet portal to provide the data, applications, information and processes specifically needed by the employee or user.

Still another advantage of the present invention is that the employee's customized portal is accessible at any time, and from any location that can access the Internet.

Other features and advantages of the present invention will be apparent from the following more detailed description of the preferred embodiment, taken in conjunction with the accompanying drawings which illustrate, by way of example, the principles of the invention.

The invention will now be described in greater detail, by way of example, with reference to the drawings, in which:-
Figure 1 illustrates schematically the organizational scheme of the Intranet portal;
Figure 2 illustrates an example of a web page for the home section of the Intranet portal;
Figure 3 illustrates an example of a web page for the personal section of the Intranet portal;
Figure 4 illustrates an example of a web page for the community section of the Intranet portal;
Figure 5 illustrates an example of a web page for the customer section of the Intranet portal;
Figure 6 illustrates an example of a web page for the performance section of the Intranet portal;
Figure 7 illustrates an example of a web page for the input section of the Intranet portal;
Figures 8 and 9 illustrate examples of pop-up windows for obtaining feedback from users; and
Figure 10 illustrates an example web page for customizing a section of the Intranet portal.

Whenever possible, the same reference numbers will be used throughout the figures to refer to the same parts.

The present invention is directed to a portal for a computer network. The computer network is preferably an Intranet, however the portal can also be used with any other type of network, for example, the Internet, a local area network (LAN), a wide area network (WAN) or Extranet. The computer network preferably has a central or server computer that is used to store the portal and other files, web pages, databases, applications, etc. that can be accessed from the portal. The computer network also preferably has one or more remote or client computers that can access the portal stored on the server computer. The client computers can access the portal and the server computer either directly or remotely. A direct access of the portal and the server computer occurs when the client computer is on the same network as the server computer. A remote access of the portal and the server computer occurs when the client computer is not on the same network as the server computer and one or more intermediate networks are required to connect the client computer and the server computer, e.g. a client computer that has to access the Internet before being able to access the server computer on an Intranet. In addition, the client computers can also be used to store other files, web pages, databases, applications, etc. that can be accessed from the portal. The client computers and server computer can be any type of general purpose computer having memory devices (e.g. RAM, ROM, hard disk, CD-ROM, etc.), processing units (e.g. CPU, ALU, etc.) and input/output devices (e.g. monitor, keyboard, mouse, printer, etc.).

In an another embodiment of the present invention, each of the client or remote computers are again linked together through an Intranet, however, instead of accessing the portal on the server computer, the client computers have loaded into their memory a complete copy of the portal. The portal is preferably a software application that is executed from the memory device of the client computer. The portal can be loaded into the memory device of the client computer from a portable medium such as a CD-ROM, DVD-ROM, floppy disk, etc., that is inserted into the client computer. Alternatively, the portal can be transferred or loaded directly into the memory device of the client computer through an electronic connection with another computer that has a stored copy of the portal. In other words, the portal can be downloaded to a client computer from another computer over the network. Finally, the portal may be implemented as hardware and incorporated as part of either client computers or the server computer.

In still another embodiment of the present invention, the client computers can be handheld or portable devices that are connected to the server computer by a wireless connection. For example, the handheld devices can be an Internet-enabled portable phone or personal digital assistant that can receive information from the Internet in a format that permits the information to be displayed on the handheld device. The portal and the server computer include the appropriate programming and functionality to render the data and information from the portal in a format that can be displayed by the handheld device. The handheld device accesses the data and information from the portal by initially accessing the Internet with the handheld device and then specifically accessing the portal through the Internet connection.

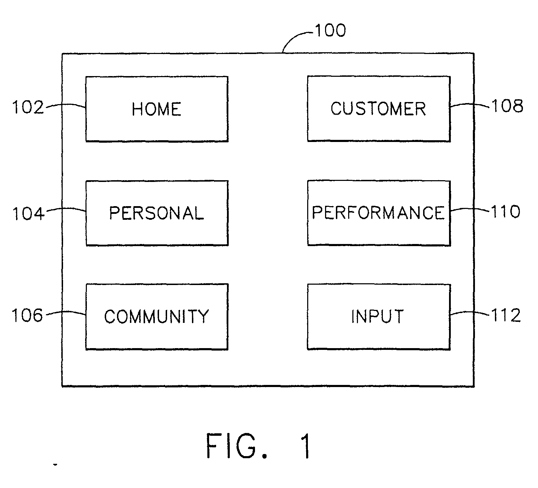

Figure 1 shows a portal 100 of the present invention having six separate sections for users of a corporate or organizational network. The portal 100 has a home section 102, a personal or user section 104, a community section 106, a customer section 108, a performance section 110 and an input section 112.

The portal 100 and its six sections 102-112 are implemented using a module or component system. Each section of the portal 100 is constructed using one or more modules. The modules are small pieces of functionality or applications preferably implemented with Java Server Page (JSP) or Servlet application programming interface (API) technology to supply or provide access to data, applications, information and processes to the user over the Intranet. JSP technology permits a developer or programmer to control the content or appearance of web pages through the use of servlets, which are small programs specified in a web page and executed on a web server to modify the web page before it is sent to the requester of the web page. However, different technologies can also be used in the modules to supply data, applications, information and processes to the user, such as Active Server Page technology.

To supply the data, applications, information and processes to the user, the modules can connect or link to web pages on the Intranet, connect or link to web sites on the Internet, execute applications or programs to retrieve and/or manipulate data from databases and execute applications or programs to retrieve and/or manipulate applications, processes or information from legacy systems and other locations and sources. In addition, after the data, applications, information and processes have been retrieved, the modules then provide the data, applications, information and processes to the user in a frame or panel on the web page(s) for the particular section of the portal 100 that is currently active. There is preferably one module for each type of data, application, information and process. However, more than one type of data, application, information and process can be included in a module.

In addition, to increase productivity, the user may be able to select the modules that are included in each section 102-112 of the user's portal 100. The user can then save or store, on either the client computer or the server computer, a particular configuration of modules for subsequent use. Afterwards, every time the user accesses the Intranet, including accesses from remote locations over an Internet connection, the user's personal configuration of modules is restored for the user. The actual data, applications, information and processes associated with the user's modules are then retrieved and provided over the Intranet, as described above, for the user, thereby relieving the user of having to expend the time and effort of locating and loading the data, applications, information and processes himself.

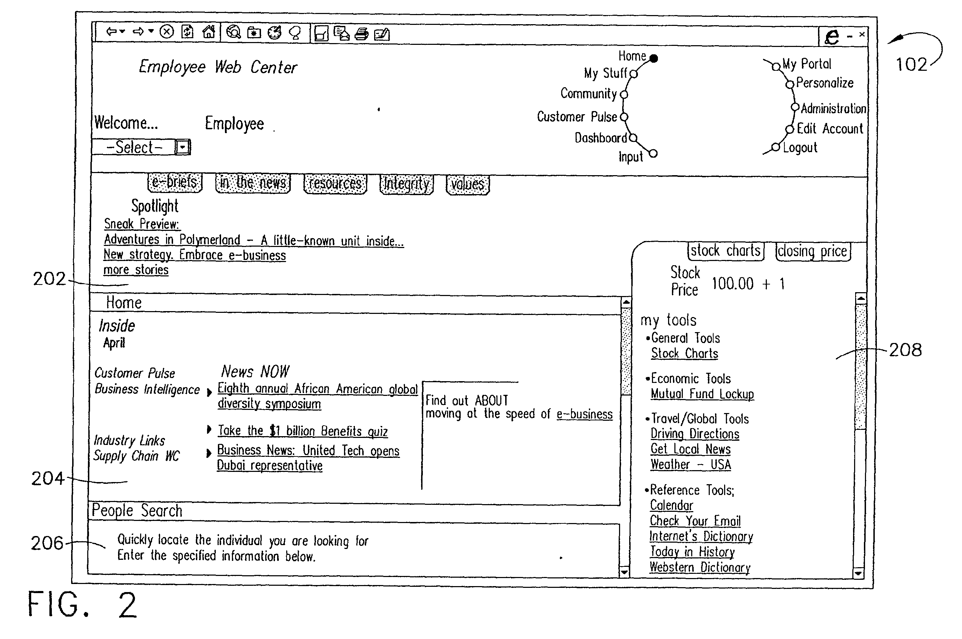

Referring back to the six sections 102-112 of the portal 100, each section of the portal 100 is described in greater detail below. The home section 102 is the entrance section to the portal 100 and is the first section that is presented to the user. Each time the user logs on or accesses the Intranet, the portal 100 automatically loads the home section 102 for the user. In another embodiment of the present invention, the user can select or designate a different section as the one that is initially loaded when the user accesses the Intranet. The user can then link or access the other sections 104-112 from the home section 102 and the user can also link or access any other section from the section that is currently active for the user. The home section 102 has modules for the data, applications, information and processes that are included in the home section 102. The data, applications, information and processes in the home section 102 are similar to the data, applications, information and processes included in many Intranet home pages and are typically included for their relevance to a large majority of users. Figure 2 illustrates a representative web page or screen from the home section 102. The home section 102 illustrated in Figure 2 uses four modules to provide data, applications, information and processes to the user. The modules included in each section are preferably organized or located into panels or regions of the section. The number, location and size of the panels can vary between the sections. For example, one section may have two panels of unequal size, while another section may have three panels of equal size. In addition, each panel can accommodate or have more than one module. If necessary, the panel can be configured with a scroll bar for the user to access all the modules in that panel. Home section 102 uses two panels with the four modules included in the home section 102. The first panel (located on the left in Figure 2) has a module 202 to provide information and links to additional information on a parent corporation or organization. The first panel also has a module 204 to provide information and links to additional information on the corporation or organization. In addition, the first panel has a module 206 to provide a person locator application. Finally, links to useful tools and applications and other information on the corporation or organization is provided to the user in the second panel (located on the right in Figure 2) with module 208. It is to be understood that the modules included in the home section 102 are not limited to the ones described above and any module can be added, removed or substituted to provide data, applications, information and processes on different topics or subjects to the user.

In one embodiment of the present invention, the user is not permitted to customize or personalize the modules included in the home section 102. The modules included in the home section 102 are pre-selected by an administrative person or entity for applicability to a majority of users of the Intranet. In another embodiment of the present invention, the user can customize the home section 102 by adding, removing or substituting certain modules. However, there can be certain modules that are included in the home section 102 that the user cannot remove.

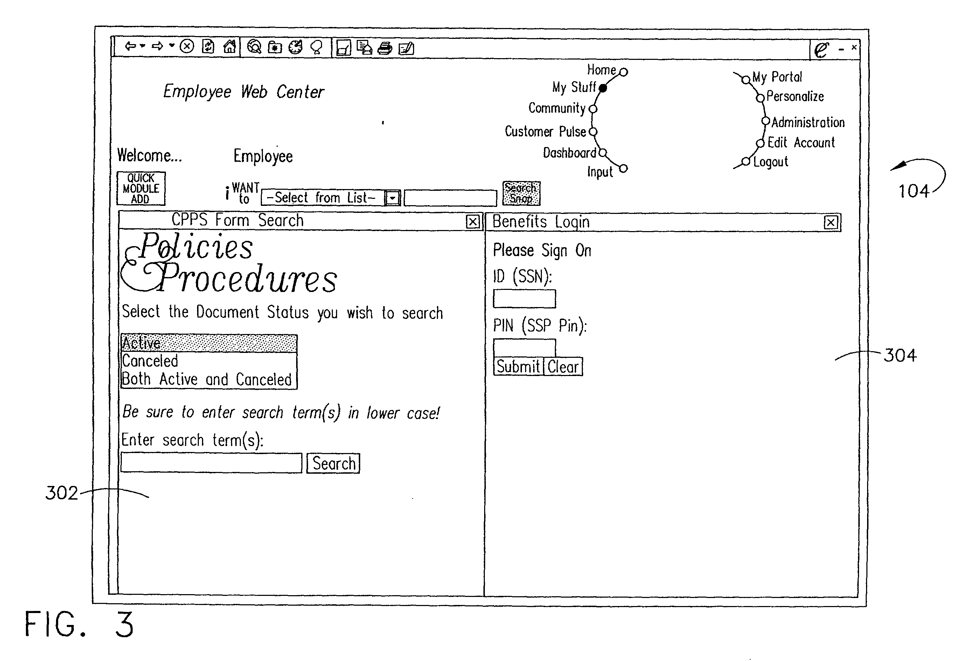

The personal or "My Stuff' section 104 is the section where the user is able to select those modules that are of personal interest to the user. The modules that are typically included in the personal section 104 provide the user with data, applications, information and processes on a variety of different topics such as benefit information, syndicated news, stock quotes and traffic cams. Figure 3 illustrates a representative web page from the personal section 104. The personal section 104 illustrated in Figure 3 uses two panels each having a module to provide data, applications, information and processes to the user.

A document search application is provided in one panel (located on the left in Figure 3) by module 302. An application that permits the user to review his benefit package from the corporation or organization is provided in the other panel (located on the right in Figure 3) by module 304. It is to be understood that the modules included in the user section 104 are not limited to the ones described above and modules can be added, removed or substituted to provide data, applications, information and processes on different topics or subjects to the user.

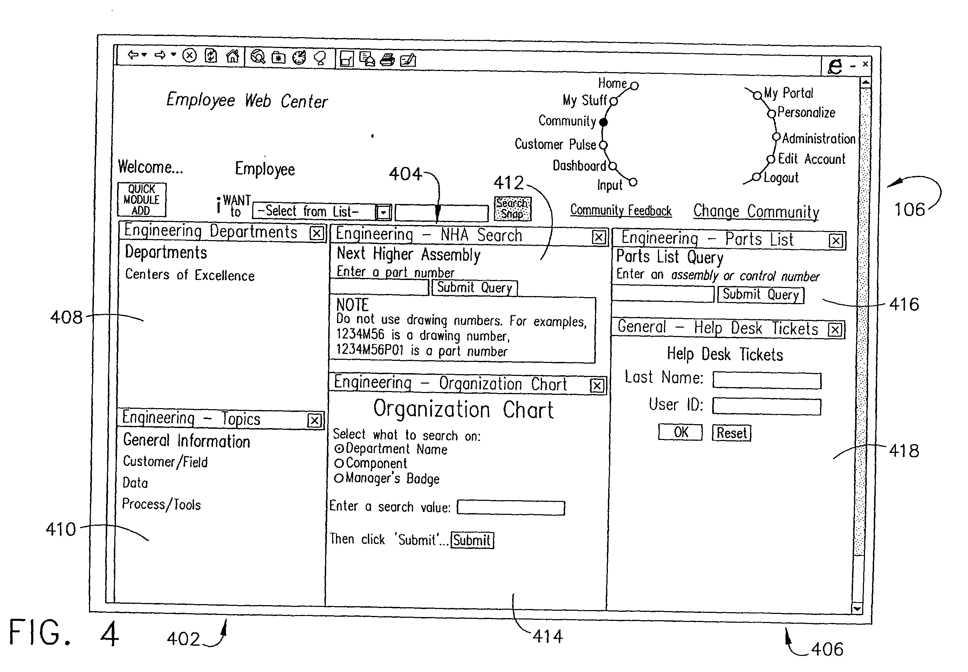

The community section 106 is for modules that are related to the user's department and occupational responsibilities. Each department or group in the corporation or organization can have a set of default modules that are loaded each time a user from the department or group enters the community section 106. In one embodiment, the user may remove or replace the default modules. While in another embodiment, the user is not able to remove or replace the default modules. In either embodiment, the user will be able to add, subtract or substitute other modules that are related to the user's responsibilities. The user can also access the default community section 106 for any other department or group in the company or organization. Figure 4 illustrates a representative web page from the community section 106. The community section 106 illustrated in Figure 4 is organized or arranged into three panels 402-406. In panel 402, a module 408 is used to permit the user to access the default modules for a department or group and module 410 is a navigation module used to permit the user to access different types of information relating to the current department in the community section 106. In panel 404, module 412 is used to access information on parts and module 414 is used to access information on the organizational scheme of the department or group. In panel 406, module 416 is used to access information and parts lists for particular assemblies and module 418 is used to obtain ticket information from help desk support people. It is to be understood that the modules included in the community section 106 are not limited to the ones described above and modules can be added, removed or substituted to provide data, applications, information and processes to the user on different topics or subjects relating to the user's particular department or group.

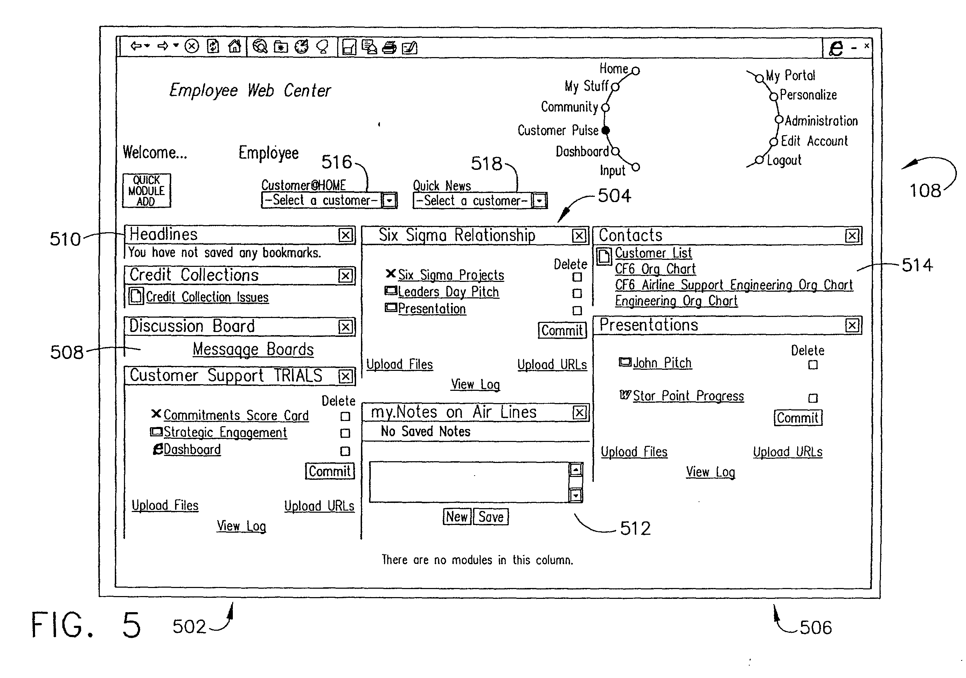

The customer section 108 is for modules that provide general information about customers of the corporation or organization. The customer section 108 also has modules that permit users to collaborate and share information on customer issues at a single location. Figure 5 illustrates a representative web page from the customer section 108. The customer section 108 illustrated in Figure 5 uses three panels 502-506 and several modules to provide data, applications, information and processes to the user relating to a particular customer or customers. For example, a discussion board module 508 and headlines module 510 are provided for a particular customer in panel 502, a comment or notes module 512 is provided in panel 504 and a contact information module 514 for the particular customer is provided in panel 506. In addition, the customer section 108 can have a customer select menu 516 that permits the user to link to a customer's web page on the Internet. To link to the customer web page a user may have to provide authentication information. The user can also access a quick news menu 518 in the customer section 108 to access recent news about a particular customer on the Internet. Again, appropriate authentication by the user may be required. It is to be understood that the modules included in the customer section 108 are not limited to the ones described above and modules can be added, removed or substituted to provide data, applications, information and processes to the user on different customer topics or subjects.

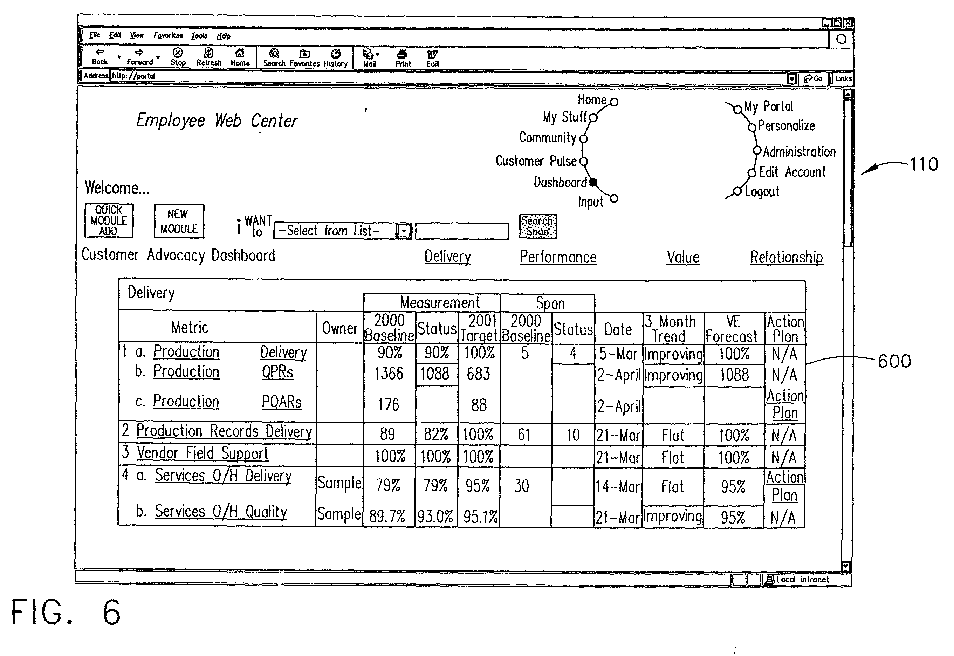

The performance section 110 is used to track top-level business goals and customer satisfaction. The performance section 110 also provides a link between process performance and individual contributions. The performance section 110 is focused on data and information to determine and drive the behavior of the business. The performance section 110 can be customized by the user and has a series of modules that are related to the user's job and position level. Figure 6 illustrates a representative web page from the performance or "dashboard" section 110. The performance section 110 has a customer advocacy region 600 on the upper half of the performance section 110 to provide metrics to track customer satisfaction. The lower half of the performance section 110 (not shown) can include modules selected by the user to provide real time data for specific processes and customers. The modules can also be designed to permit the user to "drill down" into the data in the modules. It is to be understood that the modules included in the performance section 110 are not limited to the ones described above and modules can be added, removed or substituted to provide data, applications, information and processes on different topics or subjects to the user.

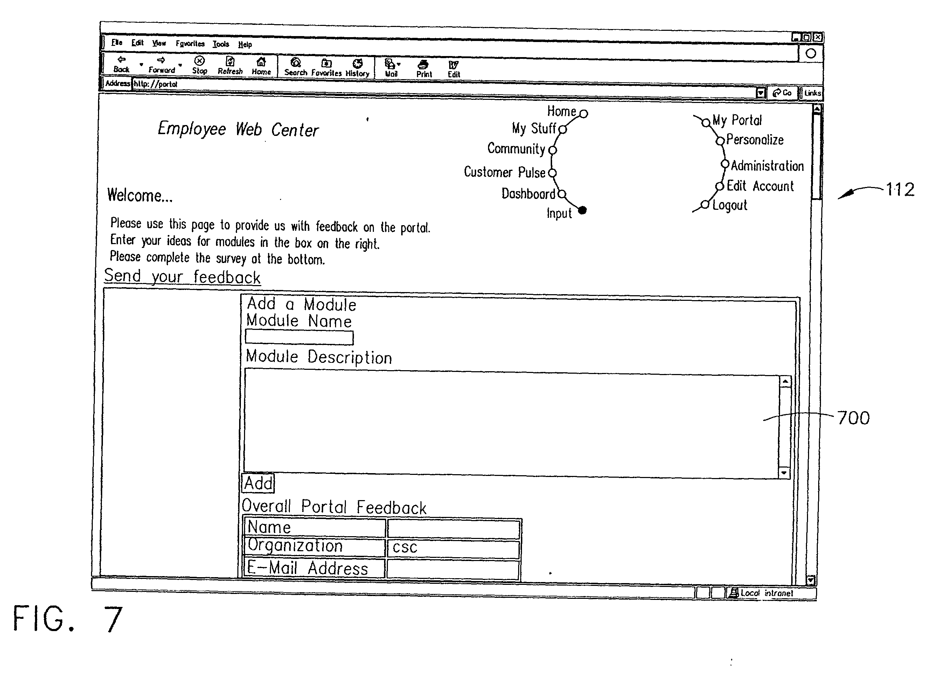

The input section 112 provides the users with the opportunity to provide feedback to the portal development and management team and is devoted to gathering information from the user community so as to alter the portal over time to satisfy the users' expectations. The user can provide feedback on the ease of use, modules, user equipment, layout, user acceptance and operationalization. In addition, information can be collected on requested modules and alterations to the graphical user interface of the portal 100. Figure 7 illustrates a representative web page from the input section 112. The input section 112 can include a module 700 that permits the users suggest new modules to be included in the portal 100. It is to be understood that the modules included in the input section 112 are not limited to the ones described above and modules can be added, removed or substituted to provide the user with an opportunity to provide additional or different feedback on the portal 100.

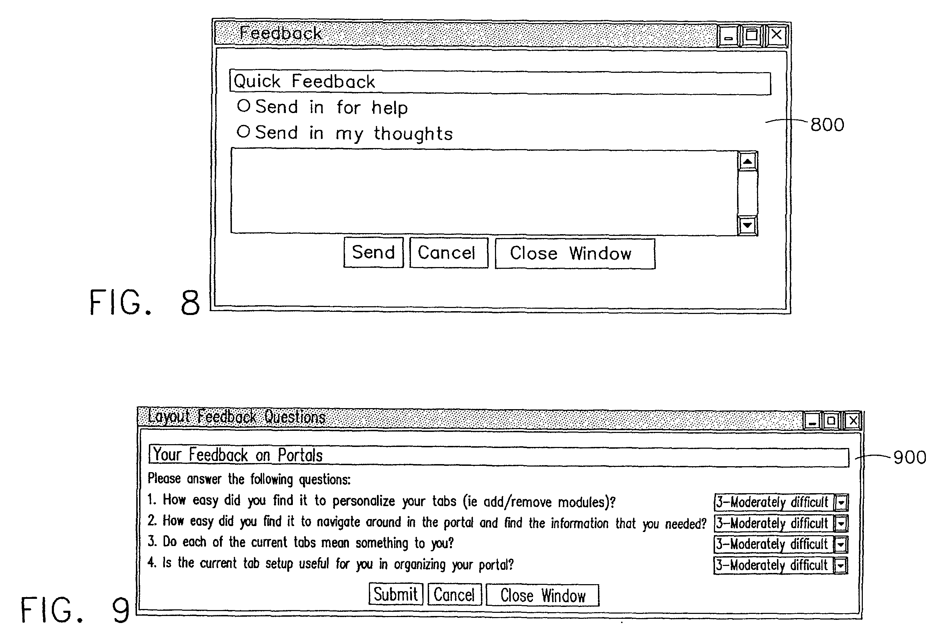

In one embodiment of the present invention, the user can be presented with pop-up windows or web pages asking for feedback when the user accesses the input section 112. Figure 8 illustrates a pop-up window 800 that appears when the user initially accesses the input section 112. The pop-up window 800 is used to provide the user with the opportunity to provide and receive quick feedback. The user in pop-up window 800 can provide a specific comment on the portal 100 or ask a specific question on the portal 100. When the user submits a comment or question through the pop-up window 800, the question or comment is sent to the portal development or management team, which then responds to the question or comment in a timely fashion. However, the user does not have to use pop-up window 800 and can provide feedback through input section 112. In another embodiment of the present invention, the ability to provide and receive quick feedback can be implemented as a link in each of the sections 102-112.

Figure 9 illustrates a pop-up window 900 that can appear while the user is accessing or using the input section 112. The pop-up window 900 is used by the portal development and management team to ask the users to provide feedback on topics that may be of interest to the portal development and management team. The pop-up window 900 can ask the user about the layout or ease of use of the portal 100 or any other topic. The user may be given a choice of answers to select from, such as in a pull-down menu, or may be permitted to type in an answer. Again, as with pop-up window 800, the user does not have to use the pop-up window 900 and can provide feedback through input section 112.

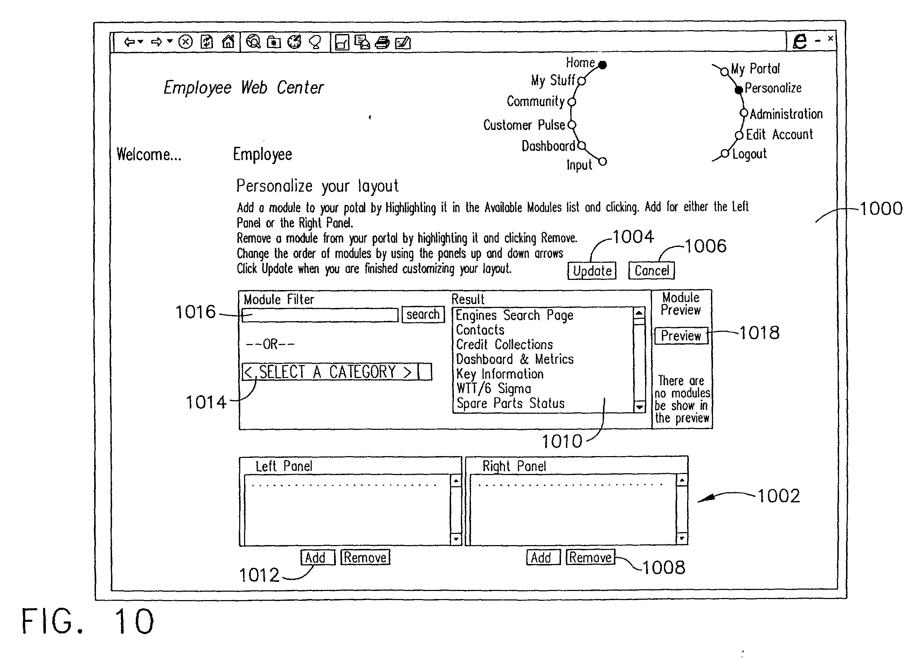

As discussed above, the user can customize each of the sections 102-112 of the portal 100 to include those modules of interest to the user. Figure 10 illustrates a web page 1000 that assists the user in customizing a section of the portal 100. To customize a section of the portal 100, the user has to access that section of the portal 100 and then select or enter the customization or personalization option. The customization or personalization option is preferably a link that connects the user to the customization web page 1000. However, other techniques can be used to select the customization option and access the customization web page 1000.

Once the user has accessed the customization web page 1000 from a particular section, the user will be able to customize and select the modules that are included in that section. The web page 1000 has a panel layout area 1002 that shows the panels that are included in the section being customized. The panel layout area 1002 can include from 1 to 4 panels depending on the panel configuration of the section being customized. The modules selected by the user for each panel are listed in the corresponding panel in the panel layout area 1002. The user can add and remove modules from the module list in each panel. The user can also rearrange the order in which the modules are displayed in the panel. To implement the changes the user has made regarding the modules in each of the panels, the user has to select the update command 1004. If the user does not select the update command 1004 or selects the cancel command 1006, the user's module changes to the panels in the section are not incorporated into the portal 100 for the next time the user accesses the section.

To remove modules from a panel, the user selects or highlights one of the modules in the panel layout area 1002 and then selects the remove button 1008. To add modules to a panel, the user highlights the module from a module list 1010 and selects the add button 1012 for the corresponding panel in the panel layout area 1002. Again, as mentioned above, for modules to be added to or removed from a panel the next time the user accesses the section, the user has to select the update command 1004.

Several options to assist the user in locating modules to include in a section are provided to the user on the customization web page 1000. When the user first accesses the customization web page 1000, the user can browse through all of the modules available on the Intranet by scrolling through the module list 1010. The user can simplify the browsing and selection process by reducing the size of the module list 1010. To reduce the size of the module list 1010, the user can select only the modules included in a particular category from pull-down menu 1014. Alternatively, the user can reduce the size of the module list 1010 by filtering out unimportant modules using the search or filter function 1016. The search function 1016 permits the user to search on keywords in the module title to obtain only those modules that correspond to the search keywords. To further help the user determine the modules to include in a section, a preview function is provided. To preview a module, the user selects the module from the module list 1010 and then selects the preview button 1018. The selected module is then displayed to the user for the user's review. After previewing the module, the user can add the module as discussed above or can select another module to preview.

In another embodiment of the present invention, the user can also add modules to sections without having to access the customization web page 1000. The user can add the module directly from the section the user is currently viewing by selecting an add module option. The add module option then adds the module designated by the user to the current section in use by the user.

The add module option, when selected by a user, generates a separate, small window from the web browser of the user, which small window includes a miniature version of the section currently in use by the user. In the small window, the user has the capability to select a module for placement into the section from which the user selected the add module option. In the small window, the user can quickly search for a particular module using different types of searching functions and find a particular module of interest using the results of a search, similar to the technique described above for the customization web page 1000. Once the user has selected a module to be added, the user selects an icon that represents the area or column of the section for placement of the module. The module is then placed into that area or column selected by the user as the last module in that area or column and the section is updated to include the module. The user can then decide to add more modules or return to the user's previous location or section in the portal 100.

The portal 100 also provides the user with a command or option to return or go back to a previous section from the user's active section. The command or option also works when the user is using a utility or application of a section such as the personalize application. The user is provided with the ability to edit his account information, such as change access passwords, etc. from separate portal applications. In addition, if the user is granted administrative or management rights, the user can access an administrative utility to perform administrative tasks. Users with administrative rights can alter and manage the modules, users and groups. For example, a user with administrative rights can determine the modules that are available for customization to the users. A user with administrative rights has a direct impact on what other users can view and customize on their individual portals.

## Claims

1. A system for a user to access information and applications on a network, the system comprising:
a server computer comprising a processor and a storage device;
a client computer connected to the server computer; and
a portal (100) stored in the storage device of the server computer and accessible by the user on the client computer, the portal (100) being configured to provide access to information and applications on a network, the portal (100) comprising:
a plurality of sections (102-112), wherein each section of the plurality of sections (102-112) comprising means for providing access to a particular type of information or application stored on the network; and
means for the user to personalize (1000) at least one section of the plurality of sections (102-112) to provide the user with access to particular information and applications related to the at least one section of the plurality of sections (102-112) as selected by the user.

2. The system of claim 1 wherein the plurality of sections (102-112) comprises:
a first section (102), the first section (102) comprises means for providing access to information and applications pertaining to an organization associated with the user;
a second section (104), the second section (104) comprises means for providing access to information and applications pertaining to personal selections by the user;
a third section (106), the third section (106) comprises means for providing access to information and applications pertaining to a division of the organization associated with the user;
a fourth section (108), the fourth section (108) comprises means for providing access to information and applications pertaining to customers of the organization associated with the user;
a fifth section (110), the fifth section (110) comprises means for providing access to information and applications pertaining to performance of the organization associated with the user; and
access to information and applications pertaining to providing feedback to the organization.

3. The system of claim 2 wherein the first section (102), the second section (104), the third section (106), the fourth section (108), the fifth section (110) and the sixth section (112) each comprise at least one module (202-208, 302-304, 408-418, 508-514, 700) being configured to provide access to information and applications on the network.

4. The system of claim 3 wherein the means for the user to personalize (1000) at least one section of the plurality of sections (102-112) comprises means for the user to select at least one module (202-208, 302-304, 408-418, 508-514, 700) for the section of the plurality of sections (102-112) being personalized by the user.

5. The system of claim 4 wherein:
the means for the user to select at least one module (202-208, 302-304, 408-418, 508-514, 700) comprises:
means for filtering (1014, 1016) modules to generate a list of modules (1010);
means for previewing (1018) a module from a list of modules (1010); and
means for selecting a module from a list of modules (1010); and
the means for the user to personalize (1000) at least one section of the plurality of sections (102-112) comprises:
means for arranging the selected at least one module (202-208, 302-304, 408-418, 508-514, 700) in the section of the plurality of sections (102-112) being personalized;
means for removing (1008) a module (202-208, 302-304, 408-418, 508-514, 700) from the section of the plurality of sections (102-112) being personalized.

6. The system of claim 3 wherein:
said at least one module (202-208, 302-304, 408-418, 508-514, 700) is constructed with Java Server Pages;
said at least one module (202-208, 302-304, 408-418, 508-514, 700) being configured to provide access to information and applications located remotely from the network.

7. The system of claim 1 wherein the client computer and the server computer are connected on an Intranet.

8. A computer program product embodied on a computer readable medium and executable by a computer for a user to obtain access to information and applications stored at a plurality of locations, the computer program product comprising:
a plurality of sections (102-112), wherein each section of the plurality of sections (102-112) being directed to a group of related information sources and applications stored at a plurality of locations, and each section of the plurality of sections (102-112) comprising means for providing access to the corresponding group of related information sources and applications; and
means for the user to personalize (1000) at least one section of the plurality of sections (102-112) to provide the user with access to particular information sources and applications in the group of related information sources and applications designated by the user.

9. The computer program product of claim 8 wherein the plurality of sections comprises:
a first section (102), the first section (102) being directed to a group of information sources and applications pertaining to an organization associated with the user;
a second section (104), the second section (104) being directed to a group of information sources and applications pertaining to personal selections by the user;
a third section (106), the third section (106) being directed to a group of information sources and applications pertaining to a division of the organization associated with the user;
a fourth section (108), the fourth section (108) being directed to a group of information sources and applications pertaining to customers of the organization associated with the user;
a fifth section (110), the fifth section (110) being directed to a group of information sources and applications pertaining to performance of the organization associated with the user;
a sixth section (112), the sixth section (112) being directed to a group of information sources and applications pertaining to providing feedback to the organization associated with the user; and
wherein the first section (102), the second section (104), the third section (106), the fourth section(108), the fifth section (110) and the sixth section (112) each comprise at least one module (202-208, 302-304, 408-418, 508-514, 700) being configured to provide access to a particular information source or application designated by the user.

10. The computer program product of claim 9 wherein the means for the user to personalize (1000) at least one section of the plurality of sections (102-112) comprises:
means for the user to select at least one module (202-208, 302-304, 408-418, 508-514, 700) for the section of the plurality of sections (102-112) being personalized by the user, the means for the user to select at least one module (202-208, 302-304, 408-418, 508-514, 700) comprises:
means for filtering (1014, 1016) modules (202-208, 302-304, 408-418, 508-514, 700) to generate a list of modules (1010);
means for previewing (1018) a module (202-208, 302-304, 408-418, 508-514, 700) from a list of modules (1010); and
means for selecting a module (202-208, 302-304, 408-418, 508-514, 700) from a list of modules (1010);
means for arranging the at least one module (202-208, 302-304, 408-418, 508-514, 700) in the section of the plurality of sections (102-112) being personalized; and
means for removing (1008) a module (202-208, 302-304, 408-418, 508-514, 700) from the section of the plurality of sections (102-112) being personalized.
